# EUROPÄISCHE PATENTSCHRIFT

(11) **EP 1 851 479 B1**
(45) Veröffentlichungstag und Bekanntmachung des Hinweises auf die Patenterteilung: **27.04.2016**
(21) Anmeldenummer: 06722475.8
(22) Anmeldetag: 13.02.2006
(51) Int. Cl.: F21S 8/10, B60Q 1/04, F21Y 115/10

(54) **BELEUCHTUNGSEINRICHTUNG**
LIGHTING DEVICE
SYSTEME D'ECLAIRAGE

(30) Priorität: 16.02.2005 DE 102005007218; 30.08.2005 DE 102005041065
(43) Veröffentlichungstag der Anmeldung: 07.11.2007
(73) Patentinhaber: OSRAM Opto Semiconductors GmbH, 93055 Regensburg (DE); OSRAM GmbH, 80807 München (DE)
(72) Erfinder: FRIEDRICHS, Rainer, 82110 Germering (DE); HAUSHALTER, Martin, 93055 Regensburg (DE); REILL, Joachim, 93197 Zeitlarn (DE); REINERS, Thomas, 89429 Bachhagel (DE)
(74) Vertreter: Epping - Hermann - Fischer
(86) Internationale Anmeldenummer: PCT/DE2006/000250
(87) Internationale Veröffentlichungsnummer: WO 2006/086953

(56) Entgegenhaltungen:
- EP-A- 1 270 324
- EP-A- 1 643 188
- WO-A-2004/059207
- WO-A-2004/088200
- WO-A1-2006/034755
- WO-A1-2006/066530
- DE-A1- 10 230 639
- US-A1- 2004 174 712
- US-A1- 2004 240 219
- US-B1- 6 527 411

## Beschreibung

Die Erfindung betrifft eine Beleuchtungseinrichtung, insbesondere für den Frontbereich eines Kraftfahrzeuges, sowie einen Kfz-Scheinwerfer.

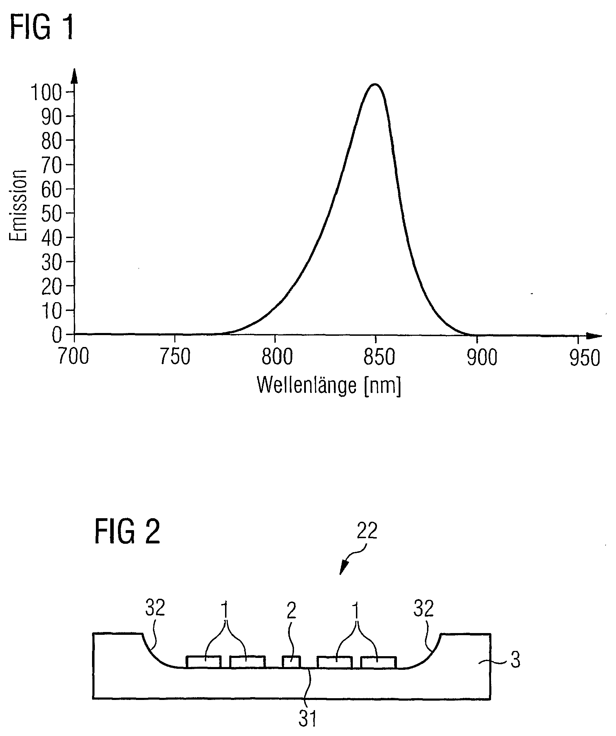

Infrarote Strahlungsquellen sollen in Kraftfahrzeugen als Beleuchtungsquellen, beispielsweise in Nachtsichtsystemen, Sensoriksystemen für Fußgängerschutz oder Abstandssensorik Anwendung finden. Das Emissionsspektrum von infraroten Strahlungsquellen umfasst häufig auch rote Anteile des sichtbaren Lichtspektrums (vergleiche hierzu Figur 1), was zu einem vielfach unerwünschten roten Farbeindruck beim Betrachter führt. Weiterhin ist es auch denkbar, dass das menschliche Auge auch für infrarote Strahlung, insbesondere nahe des roten Ende des sichtbaren Spektrums zumindest teilempfindlich ist und daher auch solche Strahlung einen unerwünschten roten Farbeindruck beim Betrachter hinterlässt. Im Frontbereich von Fahrzeugen verstößt rotes Licht sogar gegen geltende Vorschriften.

Aus der US 2004/0174712 A1 ist ein Fahrzeugscheinwerfer bekannt, der eine infrarote Lichtquelle zur Erzeugung roten und infraroten Lichts und eine sichtbare Lichtquelle zur Erzeugung sichtbaren Lichts mit einer von dem roten Licht verschiedenen Wellenlänge enthält.

Eine Aufgabe der vorliegenden Erfindung ist es, eine Beleuchtungseinrichtung, beispielsweise für den Einsatz im Frontbereich von Kraftfahrzeugen anzugeben, die mindestens eine infrarote Strahlungsquelle umfasst und keinen roten

Farbeindruck beim Betrachter hinterlässt. Eine weitere Aufgabe der vorliegenden Erfindung ist es, einen Kfz-Scheinwerfer mit einer infraroten Strahlungsquelle anzugeben, der ebenfalls keinen roten Farbeindruck beim Betrachter hinterlässt.

Diese Aufgaben werden durch eine Beleuchtungseinrichtung mit den Merkmalen des Patentanspruches 1 und durch einen Kfz-Scheinwerfer mit den Merkmalen des Patentanspruches 17 gelöst.

Vorteilhafte Weiterbildungen und Ausführungsformen der Beleuchtungseinrichtung bzw. des Kfz-Scheinwerfers sind in den jeweils abhängigen Ansprüchen angegeben.

Hiermit wird der Offenbarungsgehalt der Patentansprüche explizit in die Beschreibung aufgenommen.

Eine erfindungsgemäße Beleuchtungseinrichtung umfasst neben ersten infraroten Strahlungsquellen (im Folgenden allgemein "infrarote Strahlungsquellen" genannt) weiterhin mindestens eine zweite Strahlungsquelle, die sichtbares Licht mit einem Farbort im sichtbaren Bereich der CIE-Normfarbtafel aussendet (im Folgenden allgemein "sichtbare Strahlungsquelle" genannt), wobei die sichtbare Strahlungsquelle die infrarote Strahlungsquelle überstrahlt. Unter dem Begriff "überstrahlen" wird im vorliegenden Zusammenhang verstanden, dass sich die Strahlung der sichtbaren Strahlungsquelle mit der Strahlung der infraroten Strahlungsquelle mischt, so dass der rote Farbeindruck der infraroten Strahlungsquelle beim Betrachter wesentlich verringert wird, beziehungsweise beim Betrachter einen Farbeindruck erzeugt, der von dem von der infraroten Strahlungsquelle allein herrührenden Farbeindruck abweicht.

Damit sich die Strahlung der infraroten Strahlungsquelle mit der Strahlung der sichtbaren Strahlungsquelle so mischen kann, dass bei einem Betrachter in einem gewünschten Abstand von der Beleuchtungseinrichtung der rote Farbeindruck der infraroten Strahlungsquelle wesentlich verringert wird, beziehungsweise ein Farbeindruck erzeugt wird, der von dem von der infraroten Strahlungsquelle allein herrührenden Farbeindruck abweicht, müssen die Strahlungsquellen insbesondere geeignet angeordnet sein, beispielsweise in einem Array oder einer Matrix, wobei die Abstände zwischen den Strahlungsquellen wesentlich kleiner sind, als der Abstand des Betrachters von der Beleuchtungseinrichtung. Es ist weiterhin auch möglich, dass die Strahlung der Strahlungsquellen mit Hilfe einer Optik gemischt wird.

Eine Beleuchtungseinrichtung gemäß der Erfindung bietet den Vorteil, dass keine Filter zum Blocken der sichtbaren roten Anteile der von der infraroten Strahlungsquelle ausgesendeten elektromagnetischen Strahlung eingesetzt werden müssen. Im Gegensatz zu einem roten Farbeindruck der Beleuchtungseinrichtung auf Grund roter Spektralanteile der infraroten Strahlungsquelle, kann ein roter Farbeindruck der Beleuchtungseinrichtung verursacht durch die infrarote Strahlung selber nicht durch den Einsatz von Filtern verhindert werden, da diese dann die erwünschte infrarote Strahlung blockieren müssten.

Die zweite Strahlungsquelle sendet sichtbares Licht mit einem Farbort im weißen Bereich der CIE-Normfarbtafel aus.

Weiterhin wird bevorzugt ein weißer Farbeindruck der Beleuchtungseinrichtung erzeugt. Ein weißer Farbeindruck der Beleuchtungseinrichtung kann beispielsweise, wie oben bereits erwähnt, durch Überstrahlen der infraroten Strahlungsquelle mit einer weißen sichtbaren Strahlungsquelle erzeugt werden. Es ist aber auch denkbar, dass das sichtbare rote Licht, das von der infraroten Strahlungsquelle ausgesendet wird, beispielsweise mit grünem sichtbaren Licht gemischt wird, und so ebenfalls ein weißer Farbeindruck der Beleuchtungseinrichtung erzeugt wird.

Eine Beleuchtungseinrichtung, die einen weißen Farbeindruck beim Betrachter erzeugt, bietet den Vorteil, dass sich das von der Beleuchtungseinrichtung ausgesandte sichtbare Licht einfach in das Licht eines Scheinwerfers integrieren lässt. Weiterhin kann eine Beleuchtungseinrichtung mit einem weißen Farbeindruck mit Vorteil zusätzlich als Positionslicht genutzt werden.

Als infrarote Strahlungsquelle wird ein Leuchtdiodenchip auf Halbleiterbasis eingesetzt. Dieser umfasst eine aktive Epitaxie-Schichtenfolge, die geeignet ist, im Betrieb elektromagnetische Strahlung zu erzeugen.

Zur Strahlungserzeugung kann die Epitaxie-Schichtfolge beispielsweise einen pn-Übergang, eine Doppelheterostruktur, eine Einfachquantentopf- oder besonders bevorzugt eine Mehrfach-Quantentopfstruktur aufweisen. Die Bezeichnung Quantentopfstruktur beinhaltet keine Angabe über die Dimensionalität. Sie umfasst somit unter anderem Quantentröge, Quantendrähte und Quantenpunkte und jede Kombination dieser Strukturen.

Leichtdiodenchips, die geeignet sind im Betrieb infrarote Strahlung auszusenden, basieren beispielsweise auf Arsenid-Verbindungshalbleitermaterialien.

"Auf Arsenid-Verbindungshalbleiternmaterialien basierend" bedeutet im vorliegenden Zusammenhang, dass die aktive Epitaxie-Schichtenfolge oder zumindest eine Schicht davon ein Arsenid-III-Verbindungshalbleitermaterial, vorzugsweise AlₙGaₘIn₁₋ₙ₋ₘAs umfasst, wobei 0 ≤ n ≤ 1, 0 ≤ m ≤ 1 und n+m ≤ 1. Dabei muss dieses Material nicht zwingend eine mathematisch exakte Zusammensetzung nach obiger Formel aufweisen. Vielmehr kann es ein oder mehrere Dotierstoffe sowie zusätzliche Bestandteile aufweisen, die die charakteristischen physikalischen Eigenschaften des AlₙGaₘIn₁₋ₙ₋ₘAs-Materials im Wesentlichen nicht ändern. Der Einfachheit halber beinhaltet obige Formel jedoch nur die wesentlichen Bestandteile des Kristallgitters (Al, Ga, In, As), auch wenn diese teilweise durch geringe Mengen weiterer Stoffe ersetzt sein können.

Bei einer bevorzugten Ausführungsform der Beleuchtungseinrichtung liegt die Peakwellenlänge der infraroten Strahlungsquelle im nahen Infrarotbereich und beträgt beispielsweise 850 nm. Infrarote Strahlung aus dem nahen Infrarotbereich, beispielsweise mit einer Peakwellenlänge von 850 nm, kann vorteilhafterweise gut mit handelsüblichen Kamerasystemen detektiert werden.

Auch bei der sichtbaren Strahlungsquelle handelt es sich um einen Leuchtdiodenchip auf Halbleiterbasis mit einer Epitaxie-Schichtenfolge, die geeignet ist elektromagnetische Strahlung zu erzeugen. Der Halbleiterchip der sichtbaren Strahlungsquelle basiert bevorzugt auf Phosphid- oder Nitrid-Verbindungshalbleitermaterialien, da solche Epitaxie-Schichtenfolgen in der Lage sind, blaues oder grünes sichtbares Licht erzeugen.

"Auf Phosphid-Verbindungshalbleitermaterial basierend" bedeutet im vorliegenden Zusammenhang, dass die aktive Epitaxie-Schichtenfolge oder zumindest eine Schicht davon ein Phosphid-III-Verbindungshalbleitermaterial, vorzugsweise AlₙGaₘIn₁₋ₙ₋ₘP umfasst, wobei 0 ≤ n ≤ 1, 0 ≤ m ≤ 1 und n+m ≤ 1. Dabei muss dieses Material nicht zwingend eine mathematisch exakte Zusammensetzung nach obiger Formel aufweisen. Vielmehr kann es ein oder mehrere Dotierstoffe sowie zusätzliche Bestandteile aufweisen, die die charakteristischen physikalischen Eigenschaften des AlₙGaₘIn₁₋ₙ₋ₘP-Materials im Wesentlichen nicht ändern. Der Einfachheit halber beinhaltet obige Formel jedoch nur die wesentlichen Bestandteile des Kristallgitters (Al, Ga, In, P), auch wenn diese teilweise durch geringe Mengen weiterer Stoffe ersetzt sein können.

"Auf Nitrid-Verbindungshalbleitermaterial basierend" bedeutet im vorliegenden Zusammenhang, dass die aktive Epitaxie-Schichtenfolge oder zumindest eine Schicht davon ein Nitrid-III-Verbindungshalbleitermaterial, vorzugsweise AlₙGaₘIn₁₋ₙ₋ₘN umfasst, wobei 0 ≤ n ≤ 1, 0 ≤ m ≤ 1 und n+m ≤ 1. Dabei muss dieses Material nicht zwingend eine mathematisch exakte Zusammensetzung nach obiger Formel aufweisen. Vielmehr kann es ein oder mehrere Dotierstoffe sowie zusätzliche Bestandteile aufweisen, die die charakteristischen physikalischen Eigenschaften des AlₙGaₘIn₁₋ₙ₋ₘN-Materials im Wesentlichen nicht ändern. Der Einfachheit halber beinhaltet obige Formel jedoch nur die wesentlichen Bestandteile des Kristallgitters (Al, Ga, In, N), auch wenn diese teilweise durch geringe Mengen weiterer Stoffe ersetzt sein können.

Leuchtdiodenchips, die sichtbares Licht mit einem Farbort im weißen Bereich der CIE-Normfarbtafel aussenden, umfassen vorzugsweise Lumineszenzkonversionsstoffe, die beispielsweise direkt auf dem Leuchtdiodenchip aufgebracht sind oder sich in einer Umhüllung befinden, die dem Leuchtdiodenchip in Abstrahlrichtung nachgeordnet ist. Die Lumineszenzkonversionsstoffe wandeln einen Teil der elektromagnetischen Strahlung, die von dem Leuchtdiodenchip im Betrieb erzeugt wird, in Strahlung anderer, in der Regel längerer, Wellenlängen um, so dass der Leuchtdiodenchip mit den Lumineszenzkonversionsstoffen Mischstrahlung aus umgewandelter und nicht umgewandelter Strahlung emittiert. Wird beispielsweise ein Leuchtdiodenchip verwendet, der im Betrieb blaues Licht aussendet und ein Lumineszenzkonversionsstoff, der einen hinreichenden Teil des blauen Lichtes in gelbes Licht umwandelt, sendet der Leuchtdiodenchip mit den Lumineszenzkonversionsstoffen Mischlicht mit blauen und gelben Spektralanteilen aus, das einen weißen Farbeindruck beim Betrachter hinterlässt.

Leuchtdiodenchips mit Lumineszenzkonversionsstoffen sind beispielsweise in den Druckschriften WO 98/12757 und WO 97/50132 beschrieben, deren Offenbarungsgehalt diesbezüglich hiermit durch Rückbezug aufgenommen wird.

Weiterhin handelt es sich bei dem sichtbaren Leuchtdiodenchip oder dem infraroten Leuchtdiodenchip oder bei beiden bevorzugt um einen Dünnfilm-Leuchtdioden-Chip.

Ein Dünnfilm-Leuchtdioden-Chip zeichnet sich insbesondere durch folgende charakteristische Merkmale aus:
- an einer zu einem Trägerelement hin gewandten ersten Hauptfläche einer strahlungserzeugenden Epitaxie-Schichtenfolge ist eine reflektierende Schicht aufgebracht oder ausgebildet, die zumindest einen Teil der in der Epitaxie-Schichtenfolge erzeugten elektromagnetischen Strahlung in diese zurückreflektiert; und
- die Epitaxie-Schichtenfolge weist eine Dicke im Bereich von 20 *µ*m oder weniger, insbesondere im Bereich von 10 *µ*m auf.

Bevorzugt enthält die Epitaxie-Schichtenfolge mindestens eine Halbleiterschicht mit zumindest einer Fläche, die eine Durchmischungsstruktur aufweist, die im Idealfall zu einer annähernd ergodischen Verteilung des Lichtes in der epitaktischen Epitaxie-Schichtenfolge führt, d.h. sie weist ein möglichst ergodisch stochastisches Streuverhalten auf.

Ein Grundprinzip eines Dünnschicht-Leuchtdioden-Chips ist beispielsweise in der Druckschrift I. Schnitzer et al., Appl. Phys. Lett. 63 (16), 18. Oktober 1993, 2174 - 2176 beschrieben, deren Offenbarungsgehalt insofern hiermit durch Rückbezug aufgenommen wird.

Ein Dünnfilm-Leuchtdioden-Chip ist in guter Näherung ein Lambertscher Oberflächenstrahler und eignet sich daher insbesondere für die Anwendung in einem Kfz-Scheinwerfer.

Alternativ kann es sich bei der sichtbaren Strahlungsquelle auch um eine Glühlampe handeln.

Bei einer bevorzugen Ausführungsform der Beleuchtungseinrichtung ist jeder Strahlungsquelle in Abstrahlrichtung der Beleuchtungseinrichtung genau eine primäre Optik zur Strahlformung nachgeordnet. Bevorzugt ist die primäre Optik dazu geeignet, die Divergenz der von der Strahlungsquelle emittieren Strahlung zu verringern. Dies bedeutet beispielsweise, dass das von der Strahlungsquelle emittierte Licht bei Durchtritt durch die primäre Optik so beeinflusst wird, dass seine Divergenz, nach dem Austritt aus der primären Optik geringer ist als vor dem Eintritt in die primäre Optik.

Bei der primären Optik kann es sich beispielsweise um einen optischen Konzentrator handeln, vorzugsweise um einen nicht abbildenden optischen Konzentrator. Der optische Konzentrator weist eine Strahlungseintrittsöffnung auf, die zur Strahlungseinkopplung vorgesehen ist und eine Strahlungsaustrittsöffnung, die zur Strahlungsauskopplung vorgesehen ist. Üblicherweise, wenn der optische Konzentrator gemäß seiner Bezeichnung als "Konzentrator" für Strahlung verwendet wird, wird die Strahlung in die Strahlungseintrittsöffnung eingekoppelt und aus der Strahlungsaustrittsöffnung ausgekoppelt. Vorliegende wird jedoch genau umgekehrt verfahren, dass heißt, bei der Verwendung eines optischen Konzentrators als primäre Optik wird dieser so positioniert, dass Strahlung der Strahlungsquelle in die Strahlungsaustrittsöffnung einkoppelt, den Konzentrator durchläuft und aus der Strahlungseintrittsöffnung mit verringerter Divergenz ausgekoppelt wird.

Die primäre Optik kann, zumindest teilweise, nach Art eines der folgenden optischen Elemente gebildet sein: zusammengesetzter parabolischer Konzentrator (Compound Parabolic Concentrator, CPC), zusammengesetzter elliptischer Konzentrator (Compound Elliptic Concentrator, CEC), zusammengesetzter hyperbolischer Konzentrator (Compound Hyperbolic Concentrator, CHC). Eine solche primäre Optik bietet insbesondere den Vorteil, dass sie nicht nur die Divergenz der Strahlung verringert, sondern darüber hinaus die Strahlung, die durch sie hindurchläuft, auch besonders gut durchmischt, so dass eine im Wesentlichen homogene Strahldichte nach dem Austritt aus der primären Optik erzielt wird.

Ferner können die Seitenflächen der primären Optik Freiformflächen zum Beispiel mit Krümmungen höherer Ordnung enthalten.

Weiterhin kann es sich bei der primären Optik auch um einen Reflektor handeln, der beispielsweise als Halbschale ausgeführt ist. Umfasst die Beleuchtungseinrichtung einen Reflektor, kann die sichtbare Strahlungsquelle beispielsweise defokussiert im Reflektor angeordnet sein.

Die primäre Optik kann, zumindest teilweise, auch pyramidenstumpfförmig und/oder kegelstumpfförmig ausgebildet sein. In diesem Fall kann die primäre Optik ein Vollkörper aus einem dielektrischen Material sein. Die durch die Strahlungseintrittsöffnung in die Leuchtdiodenoptik tretende elektromagnetische Strahlung wird dann bevorzugt an den seitlichen Grenzflächen des Vollkörpers zum umgebenden Medium reflektiert. Geeignete dielektrische Materialien für den Vollkörper sind beispielsweise Glas, Polymethylmethacrylat (PMMA), Polycarbonat (PC) oder Polyacrylesterimid (PMMI).

Die primäre Optik kann reflektierende Seitenwände aufweisen, die geeignet sind, zumindest einen Teil der von der Strahlungsquelle emittierten elektromagnetischen Strahlung zu reflektieren. Die Seitenwände sind dann zumindest teilweise nach Art eines CPCs, CECs oder CHCs gebildet.

Weiterhin ist es auch möglich, dass nicht jeder Strahlungsquelle einzeln genau eine primäre Optik nachgeordnet ist, sondern dass mehreren Strahlungsquellen eine gemeinsame primäre Optik in Abstrahlrichtung der Beleuchtungseinrichtung zur Strahlformung nachgeordnet ist. Die Beleuchtungseinrichtung umfasst mehrere infrarote Strahlungsquellen. Diese können als separate Bauteile oder innerhalb eines oder mehrerer gemeinsamer Module, beispielsweise eines oder mehrere Bauelementgehäuse, vorliegen. Die sichtbare Strahlungsquelle kann ebenfalls separat vorliegen oder mit einer oder mehreren infraroten Strahlungsquellen in einem gemeinsamen Bauelementgehäuse integriert sein.

Ein geeignetes Bauelementgehäuse ist beispielsweise in der WC 02/084749 beschrieben, deren Offenbarungsgehalt diesbezüglich hiermit durch Rückbezug aufgenommen wird.

Weiterhin können die erste und die zweite Strahlungsquelle auch auf einem gemeinsamen Träger, beispielsweise einer Leiterplatte, angeordnet sein.

Mehrere infrarote Strahlungsquellen sind als Array oder Matrix angeordnet. Die sichtbare Strahlungsquelle ist an das Array oder die Matrix angehängt oder integriert. Beispielsweise ist es denkbar, dass die sichtbare Strahlungsquelle in der Mitte des Arrays integriert oder alternativ an diesen angehängt ist. Weiterhin können z.B. auch zwei sichtbare Strahlungsquellen in der Mitte des Array integriert oder auch jeweils an den Enden des Arrays positioniert sein. Äquivalent können eine oder mehrere sichtbare Strahlungsquellen in der Mitte einer Matrix angeordnet sein oder auch eine oder mehrere ganze Zeilen bzw. Spalten der Matrix ersetzten.

Bei einer weiteren vorteilhaften Ausführungsform umfasst die Beleuchtungseinrichtung zusätzlich zu mindestens einer primären Optik, , einen Lichtleiter, der, zumindest teilweise, umlaufend um die Lichtaustrittsfläche der primären Optik angeordnet ist. In diesen Lichtleiter koppelt mindestens eine sichtbare Strahlungsquelle ein, so dass der Lichtleiter sichtbares Licht aussendet und den Roteindruck resultierend von der infraroten Strahlungsquelle überdeckt. Wie bereits oben schon beschrieben, ist es auch bei dieser Ausführungsform möglich, dass entweder jeder infraroten Strahlungsquelle eine primäre Optik oder mehreren infraroten Strahlungsquellen eine primäre Optik gemeinsam in Abstrahlrichtung der Beleuchtungseinrichtung nachgeordnet ist.

Bei einer bevorzugten Ausführungsform der Beleuchtungseinrichtung ist der ersten und der zweiten Strahlungsquelle oder gegebenenfalls der oder den primären Optiken in Abstrahlrichtung mindestens ein weiteres optisches Element nachgeordnet. In diesem Fall formt das weitere optische Element die endgültige Abstrahlcharakteristik der Beleuchtungseinrichtung.

Bevorzugt umfasst das weitere optische Element zur Formung der Abstrahlcharakteristik der Beleuchtungseinrichtung eine Faseroptik und/oder eine Projektionslinse.

Bei einer weiteren Ausführungsform koppelt die sichtbare Strahlungsquelle seitlich in die primäre Optik. Handelt es sich bei der primären Optik um einen Vollkörper, ist an diesem hierzu beispielsweise ein seitlicher Flansch vorgesehen. Handelt es sich bei der primären Optik um einen Reflektor, ist die infrarote Strahlungsquelle beispielsweise defokussiert in dem Reflektor positioniert und die sichtbare Strahlungsquelle außerhalb des Reflektors, so dass diese ebenfalls defokussiert in den Reflektor einkoppelt. Es ist weiterhin auch denkbar, dass die sichtbare Lichtquelle seitlich in das weitere optische Element, wie die Projektionslinse oder die Faseroptik einkoppelt.

Weiterhin kann eine Beleuchtungseinrichtung gemäß der Erfindung beispielsweise in einem Positionslicht, einem Scheinwerfer oder einer Signalleuchte enthalten sein.

Bevorzugt ist die Beleuchtungseinrichtung gemäß der Erfindung von einem Kfz-Scheinwerfer umfasst. Bevorzugt weist hierbei die Abstrahlcharakteristik der infraroten Strahlungsquelle eine fernlicht-artige Abstrahlcharakteristik und die der sichtbaren Strahlungsquelle eine Abstrahlcharakteristik mit einem breiteren Beleuchtungsfeld auf. Vorliegend wird als "fernlichtartige Abstrahlcharakteristik" eine Abstrahlcharakteristik verstanden, die unter die Vorgaben der UNECE Regel 112 für Fernlicht fällt.

Bei einer weiteren bevorzugten Ausführungsform des Kfz-Scheinwerfers ist die Abstrahlcharakteristik der sichtbaren Strahlungsquelle positionslichtartig. Vorliegend wird als "positionslicht-artige Abstrahlcharakteristik" eine Abstrahlcharakteristik verstanden, die unter die Vorgaben der UNECE Regel 7 für Positionslicht fällt.

Es ist jedoch auch denkbar, dass die Abstrahlcharakteristik der sichtbaren Strahlungsquelle eine fernlicht-artige Abstrahlcharakteristik aufweist und die Abstrahlcharakteristik der infraroten Strahlungsquelle irgendein anderes Beleuchtungsfeld erzeugt. Weiterhin können die Abstrahlcharakteristiken der infraroten und der sichtbaren Strahlungsquelle auch beide fernlicht-artig sein.

Die Abstrahlcharakteristik der infraroten Strahlungsquelle und/oder der sichtbaren Strahlungsquelle kann weiterhin auch abblendlicht-artig oder kurvenlicht-artig sein. Vorliegend wird als "abblendlicht-artige Abstrahlcharakteristik" eine Abstrahlcharakteristik verstanden, die unter die Vorgaben der UNECE Regel 112 für Abblendlicht fällt und als "kurvenlichtartige Abstrahlcharakteristik" eine Abstralzlcharakteristik, die unter die unter die Vorgaben der UNECE Rege1 112 für Kurvenlicht fällt.

Die Erfindung eignet sich beispielsweise als Beleuchtungseinrichtung des Verkehrsraums in Verbindung mit infrarotempfindlichen Kameras. Derartige Systeme können in Nachtsichtsystemen, Sensoriksystemen für Fußgängerschutz oder Abstandssensorik für Kraftfahrzeuge eingesetzt werden. Die Beleuchtung mit einer infraroten Strahlungsquelle bietet hierbei insbesondere den Vorteil, auch bei höherer Strahlungsleistung keine Verkehrsteilnehmer zu blenden.

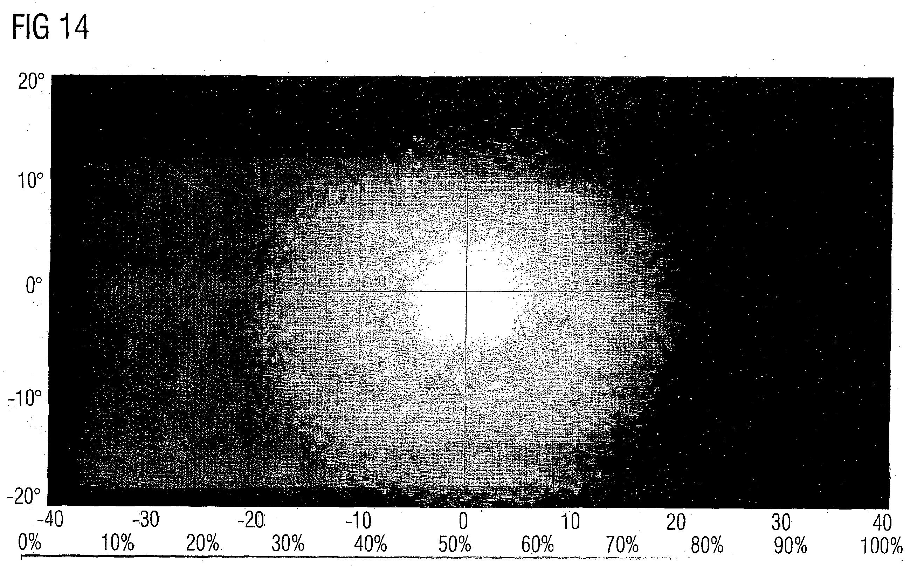

Im Folgenden wird die Erfindung anhand von Ausführungsbeispielen in Verbindung mit den Figuren 2, 3A und 3B, sowie 4 bis 14 näher erläutert.

Es zeigen:
Figur 1, Emissionsspektrum einer infraroten Leuchtdiode auf Halbleiterbasis,
Figur 2, schematische Schnittdarstellung einer Vergusswanne mit LED-Chips gemäß einem Ausführungsbeispiel der Beleuchtungseinrichtung,
Figur 3A und 3B, schematische Draufsichten von Chip-Anordnungen gemäß verschiedener Ausführungsbeispiele,
Figuren 4, 5 und 6, schematische perspektivische Ansichten der Beleuchtungseinrichtung und Details der Beleuchtungseinrichtung gemäß einem ersten Ausführungsbeispiel,
Figur 7, schematische perspektivische Ansicht der Beleuchtungseinrichtung gemäß einem zweiten Ausführungsbeispiel,
Figuren 8 und 9, schematische perspektivische Ansichten einer Beleuchtungseinrichtung gemäß einem dritten Ausführungsbeispiel,
Figur 10, schematische perspektivische Ansichten einer Beleuchtungseinrichtung gemäß einem vierten Ausführungsbeispiel,
Figur 11, schematische perspektivische Ansichten eines Bauelementgehäuses mit einem infraroten und einem weißen LED-Chip gemäß einem Ausführungsbeispiel,
Figur 12, schematische Darstellung eines KFZ-Scheinwerfers gemäß einem Ausführungsbeispiel, und
Figur 13 und 14, schematische Darstellungen der Abstrahlcharakteristik einer Beleuchtungseinrichtung gemäß einem Ausführungsbeispiel.

In den Ausführungsbeispielen und Figuren sind gleiche oder gleich wirkende Bestandteile jeweils mit den gleichen

Bezugszeichen versehen. Die dargestellten Elemente sind nicht als maßstabsgerecht anzusehen, vielmehr können einzelne Elemente zum besseren Verständnis übertrieben groß dargestellt sein.

Bei dem Ausführungsbeispiel gemäß der Figur 2 sind vier Leuchtdiodenchips 1 auf Halbleiterbasis, die im Betrieb infrarote Strahlung emittieren (im Folgenden kurz "infraroter LED-Chip" genannt) als erste infrarote Strahlungsquellen und ein Leuchtdiodenchip 2, der im Betrieb weißes sichtbares Licht emittiert (im Folgenden kurz "weißer LED-Chip" genannt) als zweite sichtbare Strahlungsquelle auf dem Boden 31 einer Vergusswanne 3 befestigt. Die LED-Chips 1, 2 sind in einem Array angeordnet, wobei sich der weiße Chip 2 in der Mitte zwischen jeweils zwei infraroten LED-Chips 1 befindet.

Wie im allgemeinen Teil der Beschreibung bereits dargelegt, handelt es sich bei den infraroten LED-Chips 1 beispielsweise um Dünnfilmchips auf der Basis von GaAs. Das Emissionsspektrum eines solchen infraroten LED-Chips 1 ist in Figur 1 gezeigt. Die Peakwellenlänge des Emissionsspektrums beträgt hierbei 850 nm. Der weiße LED-Chip 2 ist beispielsweise, wie ebenfalls bereits im allgemeinen Teil der Beschreibung dargelegt, ein LED-Chip, der blaues sichtbares Licht emittiert, das teilweise von LumineszenzKonversionsstoffen in gelbes Licht umgewandelt wird, so dass weißes Mischlicht erzeugt wird.

Die Vergusswanne 3 weist vorliegend gekrümmte Flanken 32 seitlich des Bodens 31 auf, deren Form zur Strahlformung dient. Weiterhin umfasst die Vergusswanne 3 ein reflektierendes keramisches Material.

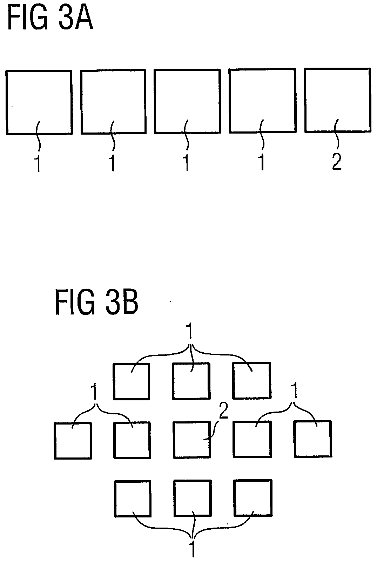

Alternativ können die infraroten LED-Chips 1 und der weiße LED-Chip 2 beispielsweise auch, wie in Figur 3A gezeigt, in einem Array angeordnet sein, bei dem der weiße LED-Chip 1 an einer der äußersten Positionen des Arrays angeordnet ist.

Eine mögliche Matrixanordnung der infraroten LED-Chips 1 und des weißen LED-Chip 2 ist in Figur 3B gezeigt. Hier ist der weiße LED-Chip 2 in der Mitte der Matrix angeordnet und alle weiteren Positionen der Matrix sind mit infraroten LED-Chips 1 besetzt. Es ist auch denkbar, dass sich bei einer solchen Matrixanordnung der weiße LED-Chip 2 an einer anderen Position befindet oder dass die Matrix mehrere weiße LED-Chips 2, vorzugsweise symmetrisch angeordnet, umfasst (nicht dargestellt).

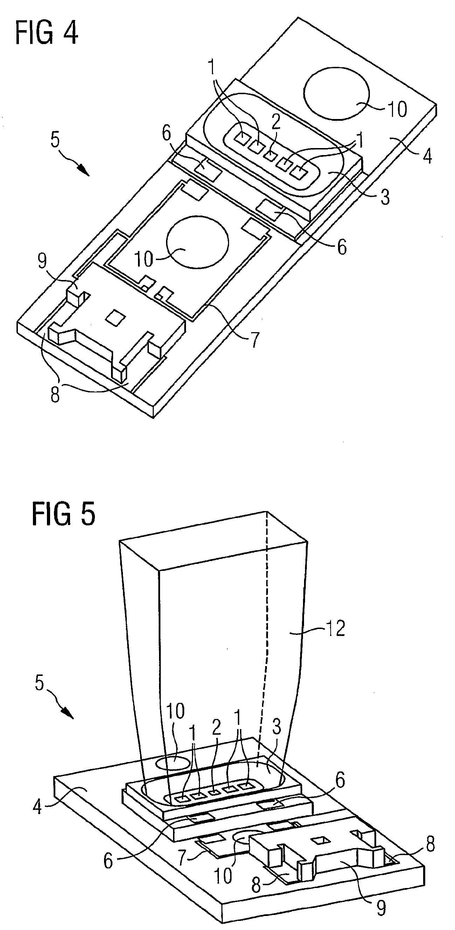

Wie in Figur 4 zu sehen, ist die Vergusswanne 3 auf eine Leiterplatte 4 montiert und bildet so ein LED-Modul 5. Die Vergusswanne 3 weist weiterhin Kontaktflächen 6 auf, über die die LED-Chips 1, 2 elektrisch kontaktiert werden können. Die Kontaktflächen 6 der Vergusswanne 3 sind mittels Leiterbahnen 7 auf der Leiterplatte 4 mit elektrischen Außenkontaktflächen 8 elektrisch leitend verbunden. Die Außenkontaktflächen 8 können mittels eines Gegensteckers 9 über eine einfache Steckverbindung von außen kontaktiert werden. Weiterhin weist die Leiterplatte 4 vorliegend Passbohrungen 10 auf, die dazu vorgesehene sind Passstifte 11 zur Befestigung des LED-Moduls 5 aufzunehmen. Wie in Figur 5 gezeigt, kann auf die Vergusswanne 3 den LED-Chips 1, 2 in ihrer Abstrahlrichtung nachgeordnet, eine primäre Optik 12, vorliegend eine CPC-artige Optik, aufgesetzt werden.

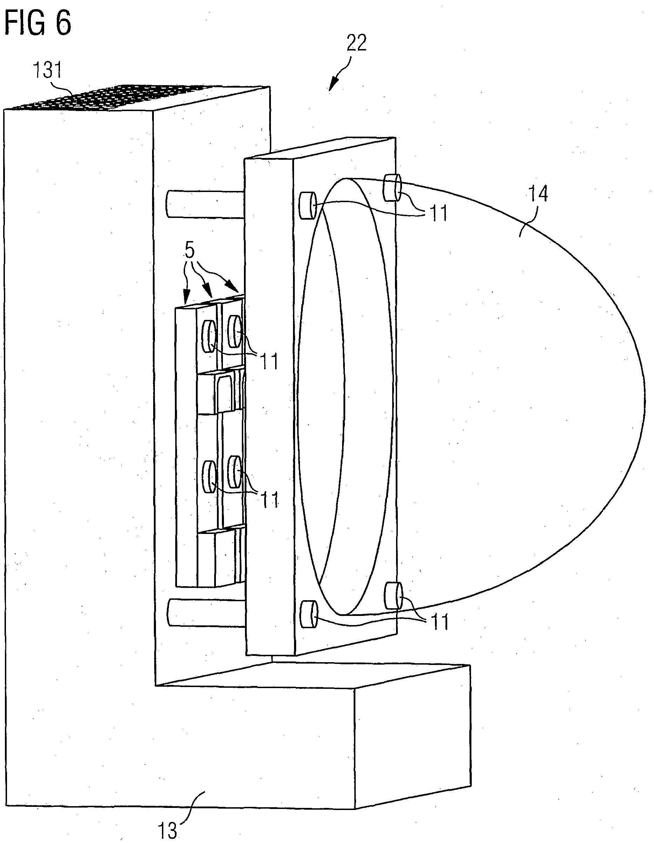

Mehrere der oben beschriebenen LED-Module 5 werden, mit oder ohne CPC-artige Optik 12, auf einem weiteren Träger 13 angeordnet und mit Passstiften 12 an diesem befestigt. Vorliegend sind die LED-Module 5 ohne primäre Optik 12 auf den Träger 13 montiert (vergleiche Figur 6). Es ist aber auch denkbar, dass auf die Vergusswannen 3 der LED-Module 5, wie in Figur 5 gezeigt, jeweils eine primäre Optik 12, beispielsweise ein CPC-artige Optik, aufgesetzt ist. Weiterhin kann mehreren LED-Modulen 5 auch eine gemeinsame primäre Optik 12 zugeordnet sein (nicht dargestellt).

Der weitere Träger 13 dient vorzugsweise auch als Kühlkörper für die im Betrieb von den LED-Modulen 5 erzeugte Wärme. Hierzu weist der Träger 13 vorliegend an seiner von den LED Modulen 5 abgewandten Oberfläche Kühlrippen 131 auf. Bevorzugt umfasst der Träger 13 zur besseren Wärmeleitung ein Metall mit guter Wärmeleitfähigkeit, wie beispielsweise Kupfer. Nachfolgend in Abstrahlrichtung der LED-Module 5 ist ein weiteres optisches Element, vorliegend eine Projektionslinse 14, angeordnet, die ebenfalls an dem Träger 13 mit Passstiften 11 befestigt ist. Die Befestigung der LED-Module 5 sowie der Projektionslinse 14 an dem Träger 13 mit Hilfe von Passstiften 11 ermöglicht es, die LED-Module 5 untereinander, sowie zur Projektionslinse 14 zu justieren.

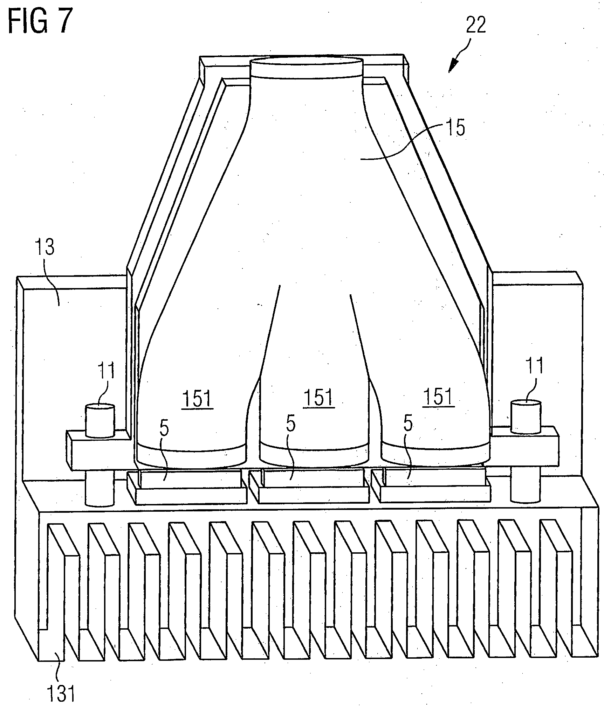

Alternativ zu einer Projektionslinse 14 kann den LED-Modulen 5 auch eine Faseroptik 15 als weiteres optisches Element in Abstrahlrichtung nachgeordnet sein (siehe Figur 7). Die von den LED-Chips 1, 2 im Betrieb erzeugte Strahlung koppelt hierbei in die Fasern 151 der Faseroptik 15 ein. Bevorzugt koppelt jeder LED-Chip 1, 2 Strahlung in genau eine dem LED-Chip 1, 2 eindeutig zugeordnete Faser 151 der Faseroptik 15 ein. Die Faseroptik 15 ist ebenfalls mit Passstiften 11 an dem Träger 13, der ebenso wie bereits oben beschrieben, Kühlrippen 131 aufweist, befestigt.

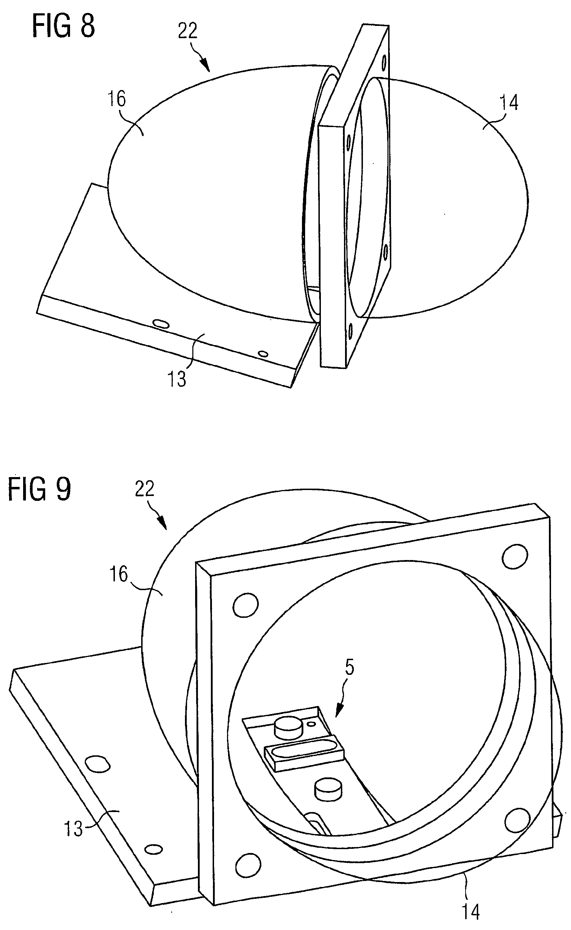

Im Unterschied zu den oben beschriebenen Ausführungsbeispielen umfasst die Beleuchtungseinrichtung 22 bei dem Ausführungsbeispiel gemäß den Figuren 8 und 9 einen Reflektor 16 als primäres optisches Element, der vorliegend als Halbschale ausgeführt ist. Der Reflektor 16 ist ebenfalls auf einen Träger 13 montiert, wobei der Träger keine separaten Kühlrippen 131 aufweist. Im Inneren des Reflektors 16 ist ein LED-Modul 5 defokussiert angebracht (siehe Figur 9). Weiterhin ist dem Reflektor 16 in Abstrahlrichtung eine Projektionslinse 14 als weiteres optisches element nachgeordnet.

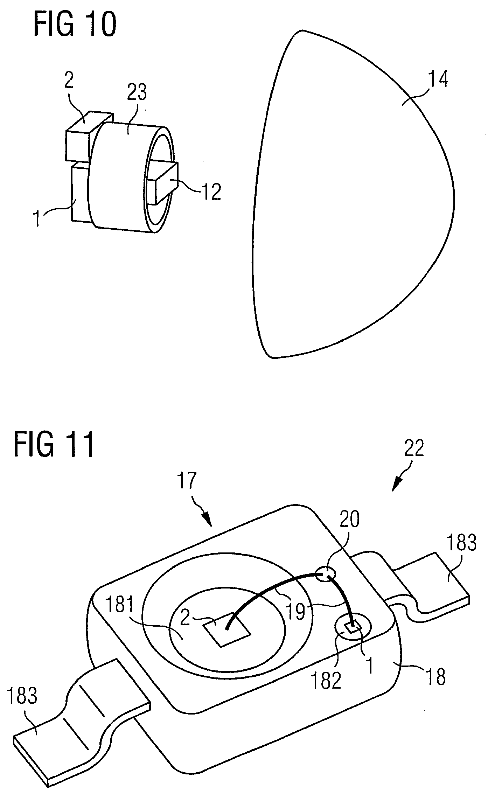

Die Beleuchtungseinrichtung gemäß Figur 10 umfasst eine infrarote Strahlungsquelle 2 und eine sichtbare Strahlungsquelle 1, wobei die infrarote Strahlungsquelle 2 in die primäre Optik 12 einkoppelt und die sichtbare Strahlungsquelle 1 in einen Lichtleiter 23, der umlaufend um die primäre Optik 12 angeordnet ist. Der primären Optik 12 und dem umlaufenden Lichtleiter 23 ist in Abstrahlrichtung wiederum eine Projektionslinse 14 nachgeordnet.

Alternativ zu einem LED-Modul 5 kann bei den oben beschriebenen Ausführungsbeispielen auch ein Leuchtdioden-Bauelement (LED-Bauelement) 17 verwendet werden, das ein Bauelementgehäuse 18 mit mindestens einem weißen LED-Chip 2 und einem infraroten LED-Chip 2 umfasst. Ein geeignetes LED-Bauelement 17 ist in Figur 11 dargestellt. Hierbei handelt es sich um ein Bauelementgehäuse 18 mit einer mittig angeordneten Vertiefung 181, in die der weiße LED-Chip 2 montiert ist und einer seitlichen kleineren Vertiefung 182, in die der infrarote LED-Chip 1 montiert ist. Die beiden LED-Chips 1, 2 sind jeweils über einen Bonddraht 19 mit einem Bondpad 20 elektrisch kontaktiert, das eine elektrisch leitfähige Verbindung mit den seitlich aus dem Bauelementgehäuse ragenden Anschlussteilen 183 herstellt. Auch dieses Bauelement 17 kann auf eine Leiterplatte 4 montiert werden.

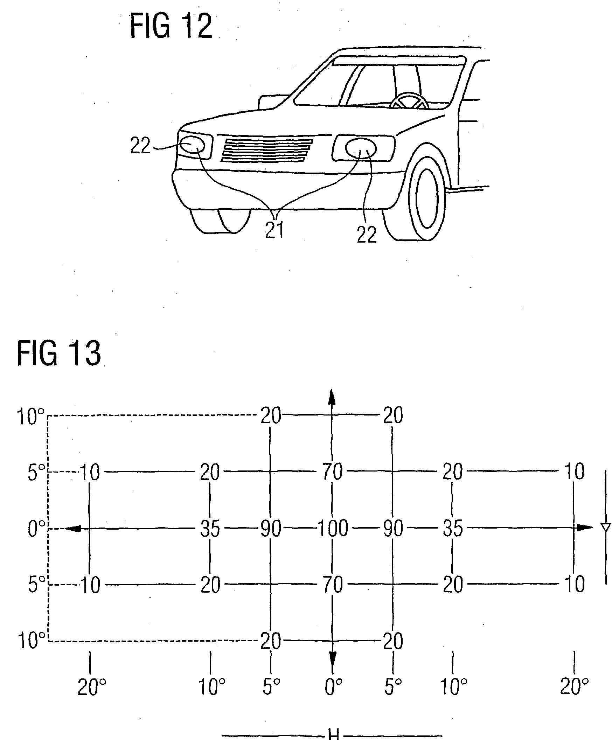

Wie Figur 12 zeigt, können die oben beschriebenen Beleuchtungseinrichtungen 22 von einem Kfz-Scheinwerfer 21 umfasst sein. Die Abstrahlcharakteristik eines solchen Kfz-Scheinwerfers umfasst einen Anteil infraroter Strahlung (im Folgenden "infrarote Abstrahlcharakteristik" genannt) als auch einen Anteil der weißen Strahlung (im Folgenden "weiße Abstrahlcharakteristik" genannt).

Diese Anteile der Abstrahlcharakteristik werden mit Hilfe der strahlformenden Element der Beleuchtungseinrichtung 22, wie beispielsweise der oder den primären Optiken 12, des oder der weiteren optischen Element 14, 15 sowie gegebenenfalls den Flanken 32 der Vergusswanne(n) 3 gezielt eingestellt.

Die sichtbare Abstrahlcharakteristik ist beispielsweise positionslicht-artig, wie in Figur 13 anhand prozentualer Intensitätswerte in Abhängigkeit des horizontalen Abstrahlwinkels (x-Achse) und des vertikalen Abstrahlwinkels (y-Achse) schematisch gezeigt ist.

Die infrarote Abstrahlcharakteristik ist beispielsweise fernlicht-artig, wie sie die simulierten prozentualen Intensitätswerte einer matrixförmigen Anordnung von zehn infraroten LED-Chips 2 mit zwei Zeilen und fünf Spalten in Abhängigkeit des horizontalen Abstrahlwinkels (x-Achse) und des vertikalen Abstrahlwinkels (y-Achse) schematisch zeigen. Die Erfindung ist nicht durch die Beschreibung anhand der Ausführungsbeispiele beschränkt. Vielmehr umfasst die Erfindung jedes neue Merkmal sowie jede Kombination von Merkmalen und insbesondere jede Kombination von Merkmalen in den Patentansprüchen, auch wenn dieses Merkmal oder diese Kombination selbst nicht explizit in den Patentansprüchen oder Ausführungsbeispielen angegeben ist. Insbesondere ist die Erfindung nicht auf eine bestimmte Abstrahlcharakteristik der Beleuchtungseinrichtung beschränkt.

## Patentansprüche

1. Beleuchtungseinrichtung (22), insbesondere vorgesehen für den Frontbereich eines Kraftfahrzeuges, die im Betrieb elektromagnetische Strahlung emittiert, mit:
- ersten Strahlungsquellen (1), die infrarote Strahlung aussenden und Leuchtdiodenchips umfassen, und
- mindestens einer zweiten Strahlungsquelle (2), die sichtbares Licht mit einem Farbort im weißen Bereich der CIE-Normfarbtafel aussendet und einen Leuchtdiodenchip umfasst,
wobei die ersten Strahlungsquellen (1) und die zweite Strahlungsquelle (2) so angeordnet sind, dass die zweite Strahlungsquelle (2) die erste Strahlungsquelle (1) überstrahlt, **dadurch gekennzeichnet**
**dass** die Leuchtdiodenchips der ersten Strahlungsquellen (1) und der mindestens einen zweiten Strahlungsquelle (2) als Array oder Matrix angeordnet auf dem Boden einer gemeinsamen Vergusswanne befestigt sind, die ein reflektierendes keramisches Material umfasst.

2. Beleuchtungseinrichtung (22) nach Anspruch 1, die für einen menschlichen Betrachter einen weißen Farbeindruck erzeugt.

3. Beleuchtungseinrichtung (22) nach einem der Ansprüche 1 oder 2, bei der der Leuchtdiodenchip einen Dünnfilm-Leuchtdioden-Chip ist.

4. Beleuchtungseinrichtung (22) nach einem der obigen Ansprüche, bei der jeder Strahlungsquelle (1, 2) genau eine primäre Optik (12) in Abstrahlrichtung der Beleuchtungseinrichtung (22) nachgeordnet ist.

5. Beleuchtungseinrichtung (22) nach einem der Ansprüche 1 bis 3, bei der mehreren Strahlungsquelle (1, 2) eine gemeinsame primäre Optik (12) in Abstrahlrichtung der Beleuchtungseinrichtung nachgeordnet ist.

6. Beleuchtungseinrichtung (22) nach einem der Ansprüche 4 und 5, bei der die primäre Optik (12) dazu ausgebildet ist, die Divergenz der von der Strahlungsquelle (1, 2) emittierten Strahlung zu verringern.

7. Beleuchtungseinrichtung (22) nach einem der Ansprüche 4 bis 6, bei der die primäre Optik (12) zumindest teilweise CPC-artig, CEC-artig, CHC-artig, pyramidenstumpfförmig und/oder kegelstumpfförmig ausgebildet ist.

8. Beleuchtungseinrichtung (22) nach einem der Ansprüche 4 bis 6, bei der die primäre Optik ein Reflektor (16) ist.

9. Beleuchtungseinrichtung (22) nach einem der obigen Ansprüche, bei der die erste und die zweite Strahlungsquelle (1, 2) auf einem gemeinsamen Träger (4) angeordnet sind.

10. Beleuchtungseinrichtung (22) nach Anspruch 9, bei der der Träger (4) eine Leiterplatte ist.

11. Beleuchtungseinrichtung (22) nach einem der Ansprüche 1 bis 8, bei der die erste und die zweite Strahlungsquelle (1, 2) auf einem gemeinsamen Bauelementgehäuse (18) angeordnet sind.

12. Beleuchtungseinrichtung (22) nach einem der obigen Ansprüche, bei der der ersten und der zweiten primären Strahlungsquelle (1, 2) oder gegebenenfalls der oder den primären Optiken (12) in Abstrahlrichtung mindestens ein weiteres optisches Element (14, 15) nachgeordnet ist.

13. Beleuchtungseinrichtung (22) nach Anspruch 12, bei der das weitere optisches Element eine Faseroptik (15) und/oder eine Projektionslinse (14) umfasst.

14. Beleuchtungseinrichtung (22) nach einem der obigen Ansprüche, mit mindestens einer primären Optik (12), die der ersten Strahlungsquelle (1) in Abstrahlrichtung nachgeordnet ist, wobei umlaufend um die Lichtaustrittsfläche der primären Optik (12)d, zumindest teilweise, mindestens ein Lichtleiter (23) angeordnet ist, in den mindestens eine zweite Strahlungsquelle (2) einkoppelt.

15. Beleuchtungseinrichtung nach einer der obigen Ansprüche, bei der die Peakwellenlänge der ersten Strahlungsquelle 850 nm beträgt.

16. Kfz-Scheinwerfer (21) mit mindestens einer Beleuchtungseinrichtung (22) nach einem der obigen Ansprüche.

17. Kfz-Scheinwerfer (21) nach Anspruch 16, bei dem die ' Strahlung der ersten primäre Strahlungsquelle (1) eine fernlicht-artige Abstrahlcharakteristik aufweist.

18. Kfz-Scheinwerfer nach Anspruch 17, bei dem die Strahlung der zweiten primären Strahlungsquelle (2) eine positionslicht-artige Abstrahlcharakteristik aufweist.

## Claims

1. Lighting device (22), in particular provided for the front region of a motor vehicle, which lighting device emits electromagnetic radiation during operation, comprising:
- first radiation sources (1) which emit infrared radiation and comprise light-emitting diode chips, and
- at least one second radiation source (2) which emits visible light having a color locus in the white region of the CIE standard chromaticity diagram and comprises a light-emitting diode chip,
wherein the first radiation sources (1) and the second radiation source (2) are arranged in such a way that the second radiation source (2) outshines the first radiation source (1) **characterized in that** the light-emitting diode chips of the first radiation sources (1) and of the at least one second radiation source (2), arranged as an array or matrix, are fixed on the base of a common potting trough comprising a reflective ceramic material.

2. Lighting device (22) according to Claim 1, which generates a white color impression for a human observer.

3. Lighting device (22) according to one of Claims 1 or 2, in which the light-emitting diode chip is a thin-film light-emitting diode chip.

4. Lighting device (22) according to one of the preceding claims, in which precisely one primary optical unit (12) is disposed downstream of each radiation source (1, 2) in the emission direction of the lighting device (22).

5. Lighting device (22) according to one of the claims 1 to 3, in which a common primary optical unit (12) is disposed downstream of a plurality of radiation sources (1, 2) in the emission direction of the lighting device.

6. Lighting device (22) according to one of the claims 4 and 5, in which the primary optical unit (12) is designed to reduce the divergence of the radiation emitted by the radiation source (1, 2).

7. Lighting device (22) according to one of the claims 4 to 6, in which the primary optical unit (12) is formed at least partly in CPC-like, CEC-like, CHC-like, truncated pyramid-shaped and/or truncated cone-shaped fashion.

8. Lighting device (22) according to one of the claims 4 to 6, in which the primary optical unit is a reflector (16).

9. Lighting device (22) according to one of the preceding claims, in which the first and the second radiation source (1, 2) are arranged on a common carrier (4).

10. Lighting device (22) according to claim 9, in which the carrier (4) is a printed circuit board.

11. Lighting device (22) according to one of the claims 1 to 8, in which the first and the second radiation source (1, 2) are arranged on a common component housing (18).

12. Lighting device (22) according to one of the preceding claims, in which at least one further optical element (14, 15) is disposed downstream of the first and the second primary radiation source (1, 2) or, if appropriate, the primary optical unit(s) (12) in the emission direction.

13. Lighting device (22) according to claim 12, in which the further optical element comprises a fiber-optic unit (15) and/or a projection lens (14).

14. Lighting device (22) according to one of the preceding claims, comprising at least one primary optical unit (12) which is disposed downstream of the first radiation source (1) in the emission direction, wherein at least one optical waveguide (23) into which at least one second radiation source (2) couples is arranged, at least partly, circumferentially around the light exit surface of the primary optical unit (12)d.

15. Lighting device according to one of the preceding claims, in which the peak wavelength of the first radiation source is 850 nm.

16. Motor vehicle headlight (21) comprising at least one lighting device (22) according to one of the preceding claims.

17. Motor vehicle headlight (21) according to Claim 16, in which the radiation from the first primary radiation source (1) has a high-beam-like emission characteristic.

18. Motor vehicle headlight according to Claim 17, in which the radiation from the second primary radiation source (2) has a position-light-like emission characteristic.

## Revendications

1. Dispositif d'éclairage (22), notamment prévu pour la région avant d'un véhicule automobile qui émet lors de son fonctionnement un rayonnement électromagnétique, comportant :
- des premières sources de rayonnement (1) émettant un rayonnement infrarouge et comprenant des puces de diodes électroluminescentes , et
- au moins une seconde source de rayonnement (2) émettant de la lumière visible dont la position de couleur se situe dans la région blanche de la table de couleurs normalisée CIE et comprend une puce de diode électroluminescente,
dans lequel les premières sources de rayonnement (1) et la seconde source de rayonnement (2) sont disposées de manière à ce que la seconde source de rayonnement (2) émette un rayonnement supérieur à celui de la première source de rayonnement (1), **caractérisé en ce que**
les puces de diodes électroluminescentes des premières sources de rayonnement (1) et de l'au moins une seconde source de rayonnement (2) sont agencées sous la forme d'un groupement ou d'une matrice sur le fond d'une cuve de scellement commune comprenant un matériau céramique réfléchissant.

2. Dispositif d'éclairage (22) selon la revendication 1, qui génère, pour un observateur humain, une sensation de couleur blanche.

3. Dispositif d'éclairage (22) selon l'une quelconque des revendications 1 ou 2, dans lequel la puce de diode électroluminescente est une puce de diode électroluminescente à couche mince.

4. Dispositif d'éclairage (22) selon l'une quelconque des revendications précédentes, dans lequel chaque source de rayonnement (1, 2) est disposée en aval d'exactement une optique primaire (12) dans la direction de rayonnement du dispositif d'éclairage (22).

5. Dispositif d'éclairage (22) selon l'une quelconque des revendications 1 à 3, dans lequel une pluralité de sources de rayonnement (1, 2) est disposée en aval d'une une optique primaire commune (12) dans la direction de rayonnement du dispositif d'éclairage.

6. Dispositif d'éclairage (22) selon l'une quelconque des revendications 4 et 5, dans lequel l'optique primaire (12) est conçue pour réduire la divergence du rayonnement émis par la source de rayonnement (1, 2).

7. Dispositif d'éclairage (22) selon l'une quelconque des revendications 4 à 6, dans lequel l'optique primaire (12) est réalisée au moins en partie de manière à être de type CPC, de type CEC, de type CHC, en forme de pyramide tronquée et/ou sous forme tronconique.

8. Dispositif d'éclairage (22) selon l'une quelconque des revendications 4 à 6, dans lequel l'optique primaire est un réflecteur (16).

9. Dispositif d'éclairage (22) selon l'une quelconque des revendications précédentes, dans lequel les première et seconde sources de rayonnement (1, 2) sont disposées sur un support commun (4).

10. Dispositif d'éclairage (22) selon la revendication 9, dans lequel le support (4) est une carte de circuit imprimé.

11. Dispositif d'éclairage (22) selon l'une quelconque des revendications 1 à 8, dans lequel les première et seconde sources de rayonnement (1, 2) sont disposées sur un boîtier de composants commun (18).

12. Dispositif d'éclairage (22) selon l'une quelconque des revendications précédentes, dans lequel est disposé en aval, dans la direction de rayonnement au moins un autre élément optique (14, 15) des première et seconde sources de rayonnement primaires (1, 2) ou, le cas échéant, de la ou des optique(s) primaire(s) (12).

13. Dispositif d'éclairage (22) selon la revendication 12, dans lequel l'autre élément optique comprend une fibre optique (15) et/ou une lentille de projection (14).

14. Dispositif d'éclairage (22) selon l'une quelconque des revendications précédentes, comportant au moins une optique primaire (12) qui est disposée en aval de la première source de rayonnement primaire (1) dans la direction de rayonnement, dans lequel au moins un guide optique (23) dans lequel est couplée en entrée au moins une seconde source de rayonnement (2) est disposé au moins partiellement de manière circonférentielle autour de la surface de sortie de lumière de l'optique primaire (12).

15. Dispositif d'éclairage selon l'une quelconque des revendications précédentes, dans lequel la longueur d'onde crête de la première source de rayonnement est de 850 nm.

16. Projecteur pour automobile (21) comportant au moins un dispositif d'éclairage (22) selon l'une quelconque des revendications précédentes.

17. Projecteur pour automobile (21) selon la revendication 16, dans lequel le rayonnement de la première source de rayonnement primaire (1) présente une caractéristique de rayonnement du type feu de route.

18. Projecteur pour automobile selon la revendication 17, dans lequel le rayonnement de la seconde source de rayonnement primaire (2) présente une caractéristique de rayonnement du type feu de position.
